(19) **Europäisches Patentamt / European Patent Office / Office européen des brevets**

(11) **EP 4 576 319 A1**

(12) # DEMANDE DE BREVET EUROPEEN

(43) Date de publication:
**25.06.2025 Bulletin 2025/26**

(21) Numéro de dépôt: **24218936.3**

(22) Date de dépôt: **11.12.2024**

(51) Classification Internationale des Brevets (IPC):
*H01M 10/44* (2006.01)  *H01M 10/42* (2006.01)
*H01M 10/48* (2006.01)  *H01M 10/613* (2014.01)
*H01M 10/615* (2014.01)  *H01M 10/625* (2014.01)
*H01M 10/63* (2014.01)  *H01M 10/633* (2014.01)
*H01M 10/651* (2014.01)  *G01R 31/00* (2006.01)
*H02J 7/00* (2006.01)

(52) Classification Coopérative des Brevets (CPC):
H01M 10/443; H01M 10/425; H01M 10/48;
H01M 10/482; H01M 10/486; H01M 10/613;
H01M 10/615; H01M 10/625; H01M 10/63;
H01M 10/633; H01M 10/651; H02J 7/007194;
H01M 2010/4271; H01M 2220/20

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **18.12.2023 FR 2314392**

(71) Demandeur: **Commissariat à l'Energie Atomique et aux Energies Alternatives
75015 Paris (FR)**

(72) Inventeurs:
• **FIETTE, Sébastien**
  **38054 c/o CEA GRENOBLE (FR)**
• **BARDY, Samuel**
  **38054 c/o CEA GRENOBLE (FR)**

(74) Mandataire: **INNOV-GROUP
209 Avenue Berthelot
69007 Lyon (FR)**

(54) **PROCÉDÉ DE GESTION THERMIQUE D'UNE BATTERIE D'UN APPAREIL ÉLECTRIQUE**

(57) L'invention concerne un procédé de gestion thermique d'une batterie (BATT), ladite batterie étant configurée pour fournir une tension à un appareil électrique sur une plage de tension dite opérationnelle, ledit procédé étant mis en oeuvre à l'aide d'une unité de gestion thermique (U_TH), ladite unité de gestion thermique (U_TH) étant configurée pour générer une température de consigne (T°cons) à appliquer à la batterie, lors de la sollicitation en puissance (PWR) de la batterie, ladite température de consigne (T°cons) étant générée à partir d'un modèle de gestion thermique (M_TH) recevant en entrée l'état de santé (SoH) de la batterie, ledit modèle de gestion thermique (M_TH) étant configuré pour déterminer la température de consigne pour assurer la réalisation d'un profil de puissance (PU_i) prédéterminé en maintenant la tension fournie par la batterie sur sa plage de tension opérationnelle, tout en minimisant la baisse de l'état de santé (SoH) de la batterie.

**Fig. 1**

## Description

### Domaine technique de l'invention

La présente invention se rapporte à un procédé de gestion thermique d'une batterie d'un appareil électrique. L'appareil électrique sera par exemple une voiture de type électrique ou hybride.

### Etat de la technique

La durée de vie d'une batterie électrique, par exemple de type lithium-ion, est un sujet particulièrement étudié, notamment dans le domaine de l'automobile.

Actuellement, pour évaluer le vieillissement d'une batterie, le système de gestion de la batterie détermine son état de santé (SoH pour « State of Health »). Cet état de santé, exprimé en pourcents, correspond au rapport entre la capacité actuelle de la batterie et la capacité initiale de la batterie. Lorsque la batterie est neuve, son état de santé est à 100%. Classiquement, le système détermine l'évolution de l'état de santé SoH de la batterie au cours du temps par des estimations ou des analyses régulières. Il est alors courant de définir la fin de vie batterie, c'est-à-dire le besoin de remplacement de celle-ci, sur la base d'une comparaison du SOH avec un seuil, par exemple de 80%.

Il est également connu de venir contrôler la température de la batterie, souvent pour optimiser son autonomie, c'est-à-dire son état de charge (SoC pour « State of Charge »). C'est le cas par exemple dans le brevet US8410760B2 qui décrit une méthode de gestion thermique d'une batterie, dont l'objectif est d'optimiser l'autonomie générale du système, sans nuire à la performance de la batterie, ni à sa durée de vie.

Dans ce brevet, une cartographie de température minimale de batterie est définie. Un système de gestion thermique de la batterie est associé à cette cartographie ; ce système entre en action et réchauffe la batterie lorsque la température de la batterie descend en dessous de la température minimale définie dans la cartographie.

A l'inverse, lorsque la température de la batterie est naturellement supérieure à la température minimale définie dans la cartographie (de par un usage intense, ou à cause d'une température ambiante élevée), le système n'agit pas.

Ce brevet met en évidence que le fait de baisser la température minimale lorsque l'état de charge (SoC) et l'état de santé (SoH) de la batterie sont élevés, permet d'accroître l'autonomie du système, car de l'énergie est économisée par le fait de moins avoir à réchauffer le pack batterie. La tendance générale est donc de chauffer le moins possible le système afin de de maximiser l'autonomie générale.

Le brevet indique également que le fait de faire fonctionner le pack batterie à une température plus basse n'a pas d'effet néfaste sur sa durabilité, ni sur sa performance, de plus, cela permettrait également d'augmenter un peu la longévité de la batterie. Cependant, ce n'est pas l'objectif de cette solution antérieure, puisque la gestion thermique de la batterie est principalement utilisée pour optimiser son autonomie système.

La demande de brevet US2021/273270A1 décrit également une solution classique de gestion de la température d'une batterie.

Il existe peu de solutions dans l'état de la technique dont l'objectif principal est de maximiser la durée de vie véritable de la batterie, c'est-à-dire de maximiser le nombre de cycles d'usage qu'elle est capable d'effectuer au cours de sa vie.

La demande de brevet GB2504689 décrit une solution pour optimiser l'efficacité énergétique d'une batterie et/ou pour optimiser la durée de vie d'une batterie.

Dans un véhicule électrique, la batterie a généralement le rôle de source de tension au sein du système. Cette source de tension n'étant pas idéale, sa tension varie en fonction de son état de charge (SoC), du courant fourni par la batterie, de la température de la batterie et de son état de santé (SoH). Généralement, plus une batterie vieillit, et plus son excursion de tension, c'est-à-dire la plage de tension sur laquelle la batterie est capable de fonctionner, s'élargit pour un profil de puissance électrique donné. Autrement dit, en fonctionnement, selon l'application, lorsque la batterie est particulièrement usée, elle est susceptible de fournir une tension très forte ou très faible. Et si l'excursion de tension de la batterie excède les seuils limites acceptables par les autres équipements connectés à la batterie, on considère alors que la batterie ne remplit plus sa fonction et qu'elle est véritablement en fin de vie pour ce type d'application.

Ceci est très différent d'une approche classique de détermination de fin de vie basée sur la comparaison de l'état de santé SoH avec une valeur seuil, comme décrit dans la demande de brevet US2021/273270A1.

L'objectif de l'invention est ainsi de maximiser la durée de vie véritable de la batterie, et donc de repousser le plus possible le moment où l'excursion de tension de la batterie excédera les valeurs limites de tension autorisées.

Autrement dit, l'objectif principal de l'invention est de maintenir la batterie le plus longtemps possible dans sa plage de tension opérationnelle, c'est-à-dire la plage de tension nécessaire au fonctionnement du système, en jouant sur la température de consigne appliquée.

**Exposé de l'invention**

Ce but est atteint par un procédé de gestion thermique d'une batterie, ladite batterie étant configurée pour fournir une tension à un appareil électrique sur une plage de tension dite opérationnelle pour faire fonctionner ledit appareil électrique, ledit procédé étant mis en oeuvre à l'aide d'une unité de gestion thermique de la batterie, ladite unité de gestion thermique étant configurée pour générer une température de consigne à appliquer à la batterie, lors de la sollicitation en puissance de la batterie, ladite température de consigne étant générée à partir d'un modèle de gestion thermique recevant en entrée l'état de santé de la batterie, ledit modèle de gestion thermique étant configuré pour déterminer la température de consigne à appliquer pour assurer la réalisation d'un profil de puissance prédéterminé en maintenant la tension fournie par la batterie sur sa plage de tension opérationnelle.

L'invention permet ainsi de repousser la fin de vie de la batterie en faisant en sorte que la batterie atteigne une valeur limite de tension le plus tard possible. Autrement dit, l'invention vise à retarder le plus possible la fin de vie sous sollicitation de la batterie, et non la fin de vie basée simplement sur l'atteinte d'un seuil d'état de santé, comme dans l'état de la technique, c'est-à-dire basée sur une capacité de stockage de la batterie. Dans l'invention, même si la batterie perd en capacité (liée à la baisse de son état de santé), la sollicitation en puissance se poursuit si la batterie reste en capacité de fournir la tension opérationnelle.

L'idée de l'invention est par exemple de réchauffer les cellules de la batterie lorsqu'elles sont proches de la fin de vie. Cela peut apparaître comme contradictoire car le vieillissement de la batterie, au sens de la baisse de son état de santé SoH, est alors accéléré, mais il s'avère en fait que ce réchauffement va permettre, in fine, de repousser le moment où une valeur limite de tension (synonyme de fin de vie) est atteinte par la batterie, prolongeant ainsi sa durée de vie sous sollicitation.

Le principe mis en oeuvre dans le cadre de l'invention est donc contre-intuitif par rapport aux approches existantes, dans lesquelles la fin de vie est déterminée sur la base d'un seuil d'état de santé SoH, et donc dans lesquelles l'objectif pour augmenter la durée de vie est uniquement de minimiser la baisse de cet état de santé SoH.

Afin de maximiser la longévité de la batterie, et ce par exemple pour différents profils d'usage d'un véhicule, le principe de l'invention est donc d'augmenter la température (de la batterie) seulement lorsque la limite de tension est sur le point d'être franchie. Le reste du temps, la température des cellules peut être maintenue assez basse, dans la zone optimale d'un point de vue perte de capacité, afin de ralentir son vieillissement défini par l'état de santé SoH.

Comme indiqué ci-dessus, la stratégie est d'implémenter dans l'unité de gestion thermique de la batterie, un modèle de gestion thermique qui permet de générer des températures de consigne qui dépendent à la fois de l'état de santé SoH et éventuellement de l'état de charge SoC de la batterie. Cette solution permet d'accroître la durée de vie sous sollicitation de la batterie par rapport aux solutions de gestion thermique antérieures. De plus, cette solution s'avère assez flexible car elle peut s'adapter à différents profils d'usage du véhicule. Par exemple, lorsque le véhicule est utilisé seulement pour des trajets domicile-travail, la valeur limite de tension est atteinte pour un état de santé SoH différent que si le véhicule est utilisé pour un usage continu sur une journée.

Avantageusement, le modèle de gestion thermique est également configuré pour déterminer la température de consigne en minimisant la baisse de l'état de santé de la batterie.

Autrement dit, dans l'invention, la fin de vie de la batterie n'est pas basée sur l'atteinte d'un seuil d'état de santé de la batterie comme dans l'état de la technique, mais sur l'incapacité de la batterie à tenir la gamme de tension opérationnelle lors d'une sollicitation en puissance. Minimiser la baisse de l'état de santé de la batterie est un critère secondaire et un deuxième objectif à atteindre.

Avantageusement, le modèle de gestion thermique est également configuré pour déterminer la température de consigne en tenant compte de l'état de charge de la batterie.

Selon une particularité, le modèle de gestion thermique est obtenu par simulation du comportement de la batterie.

Selon une autre particularité, l'obtention du modèle de gestion thermique est réalisée hors-ligne.

Selon une autre particularité, la simulation du comportement de la batterie est mise en oeuvre en utilisant un modèle de performance de la batterie, un modèle thermique de la batterie et un module de vieillissement de la batterie.

Selon une autre particularité, le modèle de performance de la batterie est configuré pour générer la tension délivrée par la batterie ainsi que l'état de charge de la batterie et sa puissance thermique, en fonction du profil de puissance prédéterminé à appliquer à la batterie, de la température de la batterie simulée à l'aide du modèle thermique, et de l'état de santé de la batterie généré par le modèle de vieillissement.

Selon une autre particularité, le modèle thermique est configuré pour générer la température de la batterie en fonction de la puissance thermique fournie par la batterie et déterminée par le modèle de performance et de la température du fluide de refroidissement.

Selon une autre particularité, le modèle de vieillissement est configuré pour déterminer l'état de santé de la batterie en tenant compte du profil de puissance appliqué à la batterie, de l'état de charge de la batterie obtenu par le modèle de performance, et de la température (de la batterie obtenue par le modèle thermique.

De manière avantageuse, le modèle de gestion thermique est défini sous la forme d'une cartographie de la température de consigne en fonction de l'état de santé de la batterie et de son état de charge.

L'invention concerne également un système de gestion thermique d'une batterie, ladite batterie étant configurée pour fournir une tension à un appareil électrique sur une plage de tension dite opérationnelle pour faire fonctionner ledit appareil électrique, ledit système de gestion thermique comportant une unité de gestion thermique de la batterie, ladite unité de gestion thermique étant configurée pour générer une température de consigne à appliquer à la batterie, lors de la sollicitation en puissance de la batterie, le système de gestion thermique étant configuré pour générer ladite température de consigne à partir d'un modèle de gestion thermique recevant en entrée l'état de santé de la batterie, ledit modèle de gestion thermique étant configuré pour déterminer la température de consigne à appliquer pour assurer la réalisation d'un profil de puissance prédéterminé, en maintenant la tension fournie par la batterie sur sa plage de tension opérationnelle.

Avantageusement, le modèle de gestion thermique est également configuré pour déterminer la température de consigne en minimisant la baisse de l'état de santé de la batterie.

Avantageusement, le modèle de gestion thermique est également configuré pour déterminer la température de consigne en tenant compte de l'état de charge de la batterie.

Selon une particularité, le modèle de gestion thermique est obtenu par simulation du comportement de la batterie.

Selon une autre particularité, l'obtention du modèle de gestion thermique est réalisée hors-ligne.

Selon une autre particularité, la simulation du comportement de la batterie est mise en oeuvre en utilisant un modèle de performance de la batterie, un modèle thermique de la batterie et un module de vieillissement de la batterie.

Selon une autre particularité, le modèle de performance de la batterie est configuré pour générer la tension délivrée par la batterie, ainsi que l'état de charge de la batterie et sa puissance thermique, en fonction du profil de puissance prédéterminé à appliquer à la batterie, de la température de la batterie simulée à l'aide du modèle thermique, de l'état de santé de la batterie généré par le modèle de vieillissement.

Selon une autre particularité, le modèle thermique est configuré pour générer la température de la batterie en fonction de la puissance thermique fournie par la batterie et déterminée par le modèle de performance et de la température du fluide de refroidissement.

Selon une autre particularité, le modèle de vieillissement est configuré pour déterminer l'état de santé de la batterie en tenant compte du profil de puissance appliqué à la batterie, de l'état de charge de la batterie et de la température de la batterie obtenue par le modèle thermique.

Selon une autre particularité, le modèle de gestion thermique est défini sous la forme d'une cartographie de la température de consigne en fonction de l'état de santé de la batterie et de son état de charge.

## Brève description des figures

D'autres caractéristiques et avantages vont apparaître dans la description détaillée qui suit, en liaison avec les figures annexées listées ci-dessous :

- La figure 1 représente de manière schématique l'architecture du système de gestion de l'invention ;
- La figure 2 illustre de manière schématique le principe de simulation de la batterie, mis en oeuvre pour l'établissement du modèle de gestion thermique employé dans le système de gestion de l'invention ;
- Les figures 3A et 3B montrent de manière schématique respectivement un exemple de réalisation du modèle de performance et un exemple de réalisation du modèle thermique employé pour la simulation du fonctionnement de la batterie ;
- Les figures 4A à 4C représentent trois diagrammes illustrant la simulation de fonctionnement d'une batterie sollicitée selon un profil d'usage déterminé ;
- La figure 5 montre une représentation graphique d'une cartographie de température obtenue après simulation du fonctionnement de la batterie et optimisation ;
- Les figures 6A et 6B montrent deux diagrammes permettant de mettre en avant les avantages de l'invention par rapport à une solution antérieure ;

## Description détaillée d'au moins un mode de réalisation

## Système de gestion de la batterie

Figure 1

L'invention vise la gestion thermique d'une batterie BATT d'un appareil électrique.

L'invention s'applique à au moins une batterie BATT, par exemple de type Lithium-Ion. Par batterie, on entend qu'elle peut comporter une ou plusieurs cellules, les cellules étant connectées en série et/ou parallèle. Le terme "batterie" englobe également ce que l'on appelle couramment "pack batterie", composé de plusieurs batteries.

Dans la suite de la description, l'expression "configuré à" ou "configuré pour" signifie que le système considéré dispose des moyens matériels et/ou logiciels pour mettre en oeuvre la fonction décrite.

Dans la suite de la description, on s'intéresse plus particulièrement à la batterie employée pour la traction d'un véhicule électrique ou hybride, mais sans se limiter à ce cas d'application.

De manière connue, dans un véhicule électrique ou hybride, un système de gestion est chargé de surveiller la batterie. Ce système de gestion comporte ce qui est connu sous le nom de BMS (pour "Battery Management System" - désigné ci-après système de gestion), destiné à la surveillance et à la gestion de la batterie, notamment de sa température, de son état de charge, du courant et de la puissance qu'elle délivre. Le système de gestion est associé avec des capteurs chargés de mesurer les différentes grandeurs.

De manière connue, une batterie est sollicitée en puissance et, dans le cadre de l'invention, on définit donc plusieurs profils de puissance différents. Selon l'usage du véhicule électrique, la batterie va en effet être sollicitée différemment. Le véhicule peut par exemple effectuer des courts trajets tous les jours, ou n'être utilisé que le week-end. A titre d'exemple, pour un profil de puissance désigné « commuting », le véhicule roule en semaine trente minutes matin et soir dans un milieu urbain, et le week-end, il roule deux heures le samedi matin puis deux heures le dimanche soir, avec des passages sur autoroute.

Chaque profil de puissance peut être défini par une courbe de sollicitation en puissance de la batterie, sur une durée déterminée. Ces profils de puissance sont utilisés dans le cadre de la détermination d'un modèle thermique M_TH de la batterie (voir ci-après).

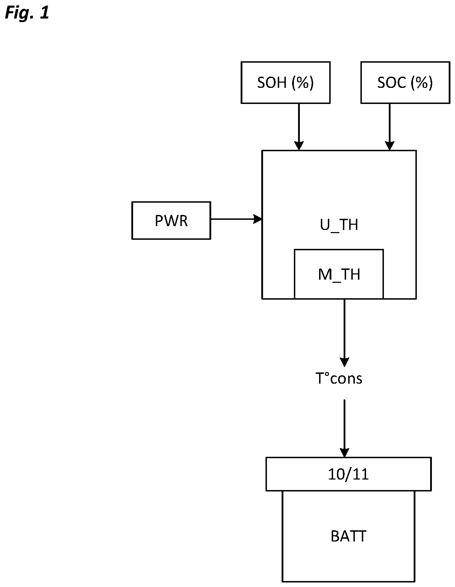

Il est possible de prédéfinir différents profils de puissance, désignés également profils d'usage PU_i. Plus la sollicitation réelle en puissance (PWR sur la figure 1) de la batterie BATT sera proche de celle qui correspond au profil de puissance sélectionné, plus la gestion thermique de la batterie qui est mise en oeuvre sera efficace.

Selon l'invention, le système de gestion comporte notamment une unité de gestion thermique U_TH de la batterie BATT.

Pour la suite de la description, on définit la plage de tension opérationnelle d'un appareil électrique comme la plage de tension sur laquelle cet appareil électrique est amené à fonctionner dans des conditions normales. Cette plage est définie par une valeur haute de tension et une valeur basse de tension. En dehors de cette plage de tension opérationnelle, l'appareil électrique ne pourra plus fonctionner normalement et sera même susceptible de se détériorer.

## Unité de gestion thermique

Figure 1

En fonctionnement, l'unité de gestion thermique U_TH de la batterie BATT est configurée pour générer en sortie une température de consigne T°cons à appliquer à des moyens de régulation 10 de la température de la batterie du système, ces moyens de régulation 10 étant couplés à des moyens de chauffage/refroidissement 11 de la batterie BATT.

Les moyens de chauffage/refroidissement 11 sont agencés pour venir chauffer ou refroidir la batterie à la température de consigne T°cons. Une boucle de régulation de température peut être exécutée par les moyens de régulation 10 du système pour maintenir la batterie BATT à la température de consigne T°cons.

L'invention réside également dans le principe de détermination de la température de consigne T°cons.

Selon l'invention, pour déterminer la température de consigne T°cons, l'unité de gestion thermique U_TH utilise un modèle de gestion thermique M_TH. Ce modèle de gestion thermique M_TH correspond au modèle utilisé par l'unité de gestion thermique U_TH pour piloter thermiquement la batterie BATT, via les moyens de régulation 10 et les moyens de chauffage/refroidissement 11.

Pour déterminer la température de consigne T°cons, l'unité de gestion thermique U_TH s'appuie sur l'état de santé de la batterie SoH, sur son état de charge SoC et tient compte du profil de puissance réel (référencé PWR sur la figure 1) rencontré, selon lequel la batterie BATT est sollicité, qui est de préférence identique ou du moins proche d'un profil de puissance PU_i simulé.

## Modèle de gestion thermique

Figure 1

Figure 2

Selon l'invention, le modèle de gestion thermique M_TH permet de faire le lien entre la température de la batterie et la tension fournie par la batterie durant une sollicitation en puissance. Il est exécuté pour déterminer la température de consigne à appliquer pour maintenir la batterie dans sa gamme de tension opérationnelle lors d'une sollicitation en puissance. Le critère appliqué est donc une durée de vie sous sollicitation en puissance, et non une durée de vie basée sur un simple critère d'état de santé SoH. Le modèle de gestion thermique M_TH est conçu pour maintenir la batterie dans sa plage de tension opérationnelle, pour retarder au maximum sa fin de vie sous sollicitation.

Le modèle de gestion thermique M_TH est configuré pour générer la température de consigne T°cons et peut prendre la forme d'une cartographie de température, la cartographie de température étant associée à un profil de puissance PU_i particulier tel que défini ci-dessus.

Le modèle de gestion thermique M_TH pourrait prendre d'autres formes, comme par exemple celles d'un ensemble d'équations ou d'une table de valeurs à plusieurs entrées...

La cartographie de température est déterminée hors ligne, par simulation du fonctionnement de la batterie (voir ci-après).

Selon l'invention, en fonctionnement, la cartographie est exécutée par l'unité de gestion thermique U_TH en se basant en entrée sur l'état de santé SoH de la batterie et sur l'état de charge SoC de la batterie.

De manière connue, l'état de santé SoH de la batterie et l'état de charge SoC de la batterie sont déterminés par le système de gestion de la batterie. Il s'agit de données rendues facilement disponibles par le système de gestion de la batterie BATT.

La cartographie utilisée par l'unité de gestion thermique U_TH fournit les valeurs de température optimales à appliquer à la batterie BATT pour maximiser la durée de vie de la batterie, et donc repousser le plus possible le moment où l'excursion de tension de la batterie excédera les seuils autorisés.

La cartographie est également établie pour faire en sorte de minimiser la baisse de l'état de santé SoH de la batterie, tout en assurant la faisabilité du profil de puissance réel PWR rencontré en respectant une contrainte sur la tension : La tension doit rester sur une plage de valeurs autorisées, entre une valeur de tension minimale et une valeur de tension maximale. Ces valeurs sont désignées ci-après valeurs limites de tension.

Ce modèle de gestion thermique M_TH, par exemple la cartographie de température, est établi hors ligne par simulation du fonctionnement de la batterie, cette simulation étant mise en oeuvre à l'aide de plusieurs modèles. Par « hors ligne », on entend par exemple que la détermination du modèle de gestion thermique M_TH peut être réalisée en usine.

**Etablissement du modèle de gestion thermique**

Figure 2

Figure 3A

Figure 3B

Figure 4A

Figure 4B

Figure 4C

Le modèle de gestion thermique M_TH est déterminé hors ligne par optimisation, en utilisant un ensemble de modèles permettant de simuler le comportement de la batterie.

Pour cette simulation, on utilise ainsi un modèle de performance M_perf et un modèle thermique M_therm de la batterie, qui sont couplés à un modèle de vieillissement M_v de la batterie. Pris individuellement, ces modèles peuvent être classiques et bien connus. L'invention vise à combiner ces modèles entre eux et à les utiliser pour simuler le comportement de la batterie dans le contexte d'une sollicitation en puissance connue à l'avance, en vue d'en sortir un modèle de gestion thermique M_TH dans lequel la température de consigne T°cons déterminée en sortie permet de prolonger la durée de vie de la batterie sur la plage de tension opérationnelle sous sollicitation connue, ceci éventuellement au détriment d'autres critères comme son état de santé SoH.

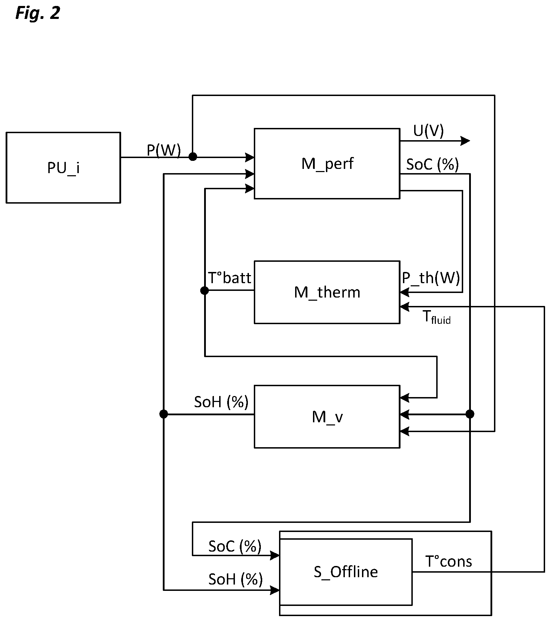

Le modèle de gestion thermique M_TH est typiquement défini par un système de gestion, désigné S_Offline sur la figure 2, qui est externe à l'unité de gestion thermique U_TH embarquée, par exemple lors de la configuration en usine de l'unité de gestion thermique U_TH. Il peut bien entendu être établi par tout autre système adapté à la simulation du comportement de la batterie selon les principes décrits ci-dessous. Alternativement, le système BMS et l'unité de gestion thermique U_TH peuvent disposer des moyens permettant d'effectuer eux-mêmes la détermination du modèle de gestion thermique M_TH.

Pour établir la cartographie, le système de gestion S_Offline choisit plusieurs points d'état de santé SoH de la batterie BATT et plusieurs points d'état de charge SoC de la batterie, pour lesquels il souhaite déterminer une valeur de température.

Ensuite, pour chaque point d'état de santé choisi, le système de gestion S_Offline résout un problème d'optimisation destiné à fournir la température optimale à laquelle la batterie doit être placée pour chaque point d'état de charge SoC.

De plus, pour chaque problème d'optimisation, le système de gestion S_Offline simule un usage élémentaire de la batterie en ayant pour point de départ le point d'état de santé choisi initialement. L'usage élémentaire de la batterie correspond à un profil de puissance tel que défini ci-dessus. Autrement dit, la simulation consiste à :

- Fixer un état de santé SoH à la batterie ;

- Simuler la sollicitation de la batterie selon un profil de puissance PU_i déterminé ;

- Optimiser simultanément les valeurs de consigne de température affectées à chaque point d'état de charge SoC de la batterie afin de déterminer les températures optimales qui garantissent la réalisation du profil de puissance PU_i, en restant dans la plage de valeurs limites de tension autorisée, tout en minimisant avantageusement la baisse de l'état de santé SoH de la batterie ;

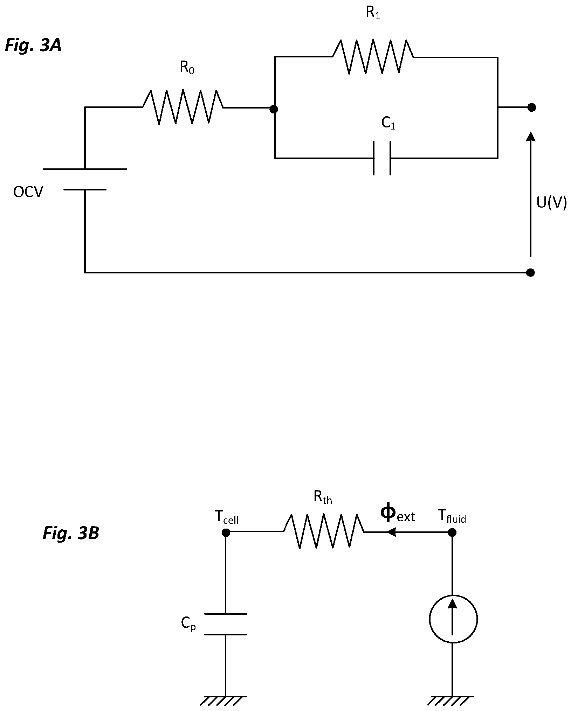

En référence à la figure 3A, le modèle de performance M_perf utilisé par le système est de type circuit électrique équivalent. Dans le modèle, les paramètres R0, R1 et C1 sont définies par des cartographies dépendantes de plusieurs facteurs comme la température T°batt, l'état de charge SoC, l'état de santé SoH ou encore le régime de décharge de la batterie (appelé « C-rate » et qui correspond au rapport entre le courant appliqué et la capacité de la batterie). Le paramètre désigné OCV correspond à la tension à vide de la batterie et dépend de l'état de charge SoC de la batterie.

Le modèle de performance M_perf prend, en entrée, la puissance P définie par le profil de puissance PU_i, l'état de santé SoH de la batterie et la température T°batt de la batterie et renvoie la tension U que la batterie BATT fournit en sortie, ainsi que le terme de source de chaleur (puissance thermique P_th) utilisé par le modèle thermique, et l'état de charge SoC de la batterie. Le régime de décharge C-rate provient du courant, lui-même calculé à partir du profil de puissance exigé et de la tension U renvoyée. La température des cellules est issue du modèle thermique (voir ci-dessous). Comme indiqué, la tension U fournie par la batterie doit rester sur la plage opérationnelle.

L'état de santé SoH de la batterie est généré par le modèle de vieillissement M_v de la batterie. Le lien entre l'état de charge SoC de la batterie, le courant et l'état de santé SoH de la batterie est donné par l'équation ci-dessous :

$$SoC = -100 * \frac{\frac{\int I}{3600}}{\frac{SoH * Capa_{initiale}}{100}}$$

Le modèle de vieillissement M_v employé est lui aussi empirique et il est régi par les équations suivantes, $Q_{loss}$ représentant la perte totale de capacité de la batterie BATT en vieillissant.

$$Q_{loss} = Q_{loss,cyc} + Q_{loss,cal}$$

Dans laquelle, le vieillissement cyclage $Q_{loss,cyc}$ correspond à :

$$\frac{dQ_{loss,cyc}}{dt} = \frac{K_{1,cyc}}{1 + K_{2,cyc} * Q_{loss,tot}}$$

Et le vieillissement calendaire $Q_{loss,cal}$ correspond à :

$$\frac{dQ_{loss,cal}}{dt} = \frac{K_{1,cal}}{1 + K_{2,cal} * Q_{loss,tot}}$$

Les deux paramètres $K_{1,cal}$ et $K_{2,cal}$ dépendent encore une fois de facteurs tels que la température T°batt de la batterie, l'état de charge SoC et le régime de décharge C-rate, qui correspondent donc aux entrées du modèle de vieillissement. Celui-ci renvoie l'état de santé SoH, dont le lien avec la perte de capacité $O_{loss}$ est explicité ci-dessous.

$$SoH = 100 * \frac{Capa_{initiale} - Q_{loss}}{Capa_{initiale}}$$

Le terme $Capa_{initiale}$ correspond à la capacité initiale de la batterie.

Le modèle de vieillissement est ainsi utilisé pour tenter de minimiser le vieillissement de la batterie, c'est-à-dire la baisse de son état de santé SoH.

Le modèle thermique M_therm utilisé est lui aussi représenté par un circuit électrique équivalent, représenté sur la figure 3B. Il permet de déterminer la température T°batt de l'ensemble des cellules de la batterie à partir de la résistance thermique Rth de chaque cellule et de sa capacité Cp.

Ainsi, les équations permettant d'obtenir la température d'une cellule sont les suivantes :

$$\begin{cases} \Phi_{ext} = \dfrac{T_{fluid} - T_{cell}}{R_{th}} \\ \dfrac{dT_{cell}}{dt} = \dfrac{(\Phi_{ext} + P\_th)}{C_p} \end{cases}$$

Dans lesquelles :

$\phi_{ext}$ correspond au flux de chaleur appliqué de l'environnement vers la cellule (W) ;

$P\_th$ correspond au terme de source de chaleur générée au sein de la cellule (W) ;

$T_{fluid}$ correspond à la température du fluide de refroidissement ou réchauffement (°K) ;

$T_{cell}$ correspond à la température de la cellule (°K) ;

$R_{th}$ (K.W$^{-1}$) correspond à la résistance thermique ;

$C_p$ (J.K$^{-1}$) correspond à la capacité de la cellule ;

Le modèle thermique est utilisé pour déterminer la température de la batterie dans les différentes conditions de fonctionnement. La contrainte sur la tension n'est pas régie par le modèle thermique, mais par le modèle de performance décrit ci-dessus.

Cet ensemble de modèles permet ainsi de simuler le comportement d'une batterie BATT à partir d'un profil de puissance PU_i imposé. Si la tension délivrée par la batterie sort de la plage de tension de fonctionnement, la simulation s'arrête et la fin de vie est considérée atteinte.

Les optimisations faites pour déterminer la cartographie de température idéale reposent sur la simulation de ces trois modèles.

Par ailleurs, la simulation réalisée permet d'accéder aux données de vieillissement de la batterie, mais aussi à la durée qu'il manque pour finir le profil de puissance exigé, à partir du moment où une valeur limite de tension est atteinte. En effet, dans certaines situations, pour un état de santé SoH et un état de charge SoC donnés, la simulation effectuée pour le profil de puissance PU_i sélectionné peut conclure à l'atteinte d'une valeur limite de tension, synonyme de fin de vie de la batterie, alors que la totalité du profil de puissance PU_i n'a pas été exécuté.

Dans ce cas, le système donne accès à la durée qui restait à effectuer pour que la batterie BATT puisse terminer le profil de puissance simulé, dénommé par la suite durée restante.

Cette durée restante est intégrée à un calcul de coût, afin de contraindre l'algorithme à tendre vers une solution assurant la faisabilité de l'ensemble du profil de puissance. Si l'optimisation est faite pour différents profils d'usage (et donc de puissance) du véhicule de manière distincte, une semaine est simulée pour chacun des profils et le coût total est la somme des coûts correspondant à chaque profil. Le coût total est donc calculé à partir des équations suivantes :

$$Co\hat{u}t_{total} = \sum_{profil=1}^{nb\ profils} Co\hat{u}t_{profil\_i}$$

$$Co\hat{u}t_{profil\_i = Dur\acute{e}e\ restante_i + \Delta SoH_i}$$

Lorsque la durée restante est nulle (c'est-à-dire que le profil de puissance a été entièrement exécuté), on comprend que pour le profil de puissance sélectionné, la contrainte d'optimisation ne sera réalisée que sur la variation de l'état de santé $\Delta SoH_i$.

En revanche, lorsque le profil de puissance n'est pas complètement réalisable, c'est-à-dire qu'une valeur de tension limite est atteinte avant la fin d'exécution du profil de puissance, l'algorithme d'optimisation cherche dans ce cas en priorité à diminuer la durée restante pour assurer la réalisation de la totalité du profil de puissance.

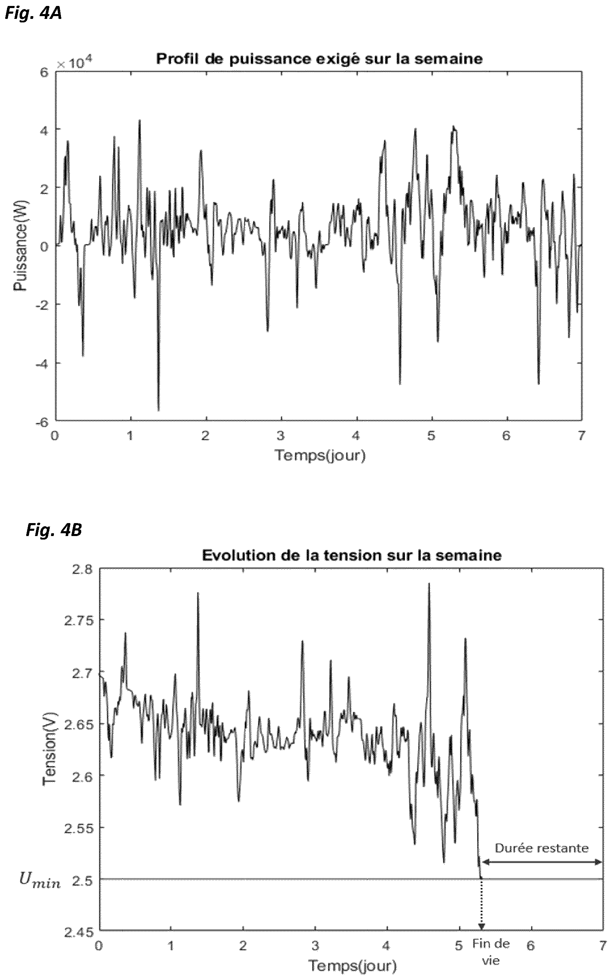

Les figures 4A à 4C montrent plusieurs diagrammes simulant le fonctionnement d'une batterie sur un profil de puissance particulier (figure 4A) qui dure une semaine.

La figure 4B montre la courbe de tension suivie par la batterie lors d'une simulation de fonctionnement sur le profil de puissance d'une semaine.

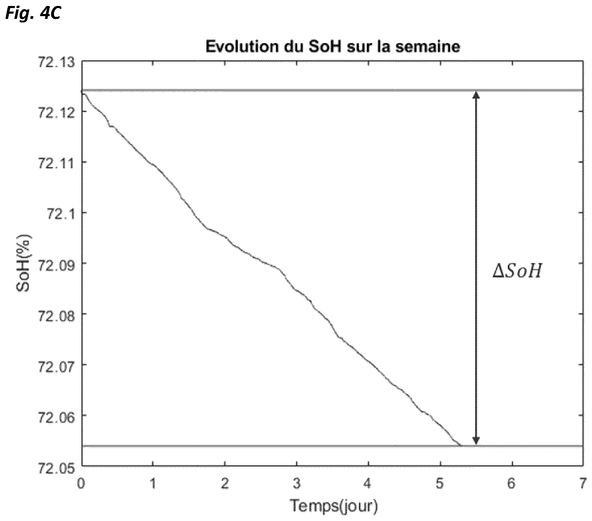

Et la figure 4C montre l'évolution de l'état de santé de la batterie SoH sur la semaine.

Dans cet exemple, on constate sur la figure 4B que la batterie atteint une valeur limite (basse) de tension avant la fin du profil de puissance, synonyme de fin de vie. L'algorithme détermine ainsi la durée restante nécessaire pour terminer le profil de puissance.

**Cartographie de température**

Figure 5

Figure 6A

Figure 6B

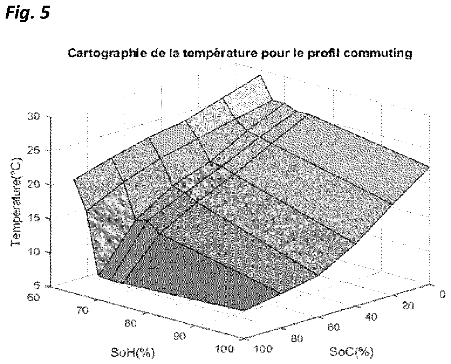

La figure 5 montre un diagramme illustrant une cartographie de température obtenue après simulation de fonctionnement de la batterie BATT selon le profil de puissance de type « commuting ». Cette cartographie est obtenue en se basant sur les données d'entrée ci-dessous :

| Points de SoH (%) | 65, 67.5, 70, 72.5, 75, 100 |
|---|---|
| Points de SoC (%) | 0, 20, 40, 60, 80, 100 |
| Profil d'usage du véhicule/profil de puissance | De type « commuting » |
| Température ambiante extérieure | 25°C |

Pour le profil désigné « commuting », le véhicule roule en semaine 30 minutes matin et soir dans un milieu urbain, et le week-end, deux heures le samedi matin puis deux heures le dimanche soir, avec des passages sur autoroute.

Sur la figure 5, on observe en particulier les zones d'élévation de température quand l'état de santé SoH est faible, afin de ne pas se trouver en défaut du point de vue de la tension.

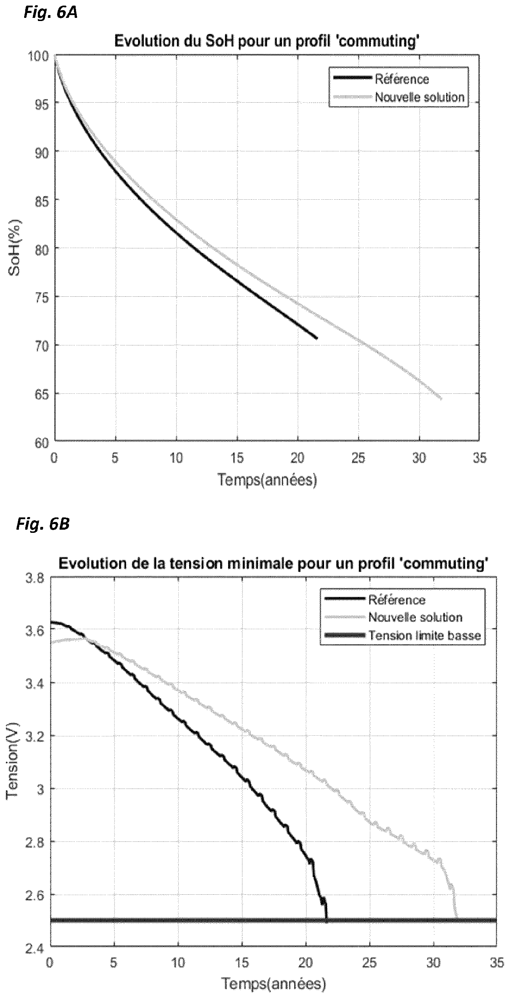

Les figures 6A et 6B montrent l'évolution de l'état de santé SoH (figure 6A) et l'évolution de la tension minimale atteinte en cours d'usage (figure 6B) pour une gestion thermique conforme à l'invention et une gestion thermique de référence imposant une température de consigne constante à 16°C.

On constate que la solution de gestion thermique de la batterie conforme à l'invention permet dans cet exemple d'augmenter la durée de vie véritable de +47%. Elle passe de 21 ans et 7 mois à 31 ans et 10 mois. L'invention a donc ici un impact positif très important sur la longévité de la batterie.

La cartographie de température dépendant à la fois de l'état de santé SoH et de l'état de charge SoC permet dans une première phase de vieillir de façon comparable au cas du gestion thermique de l'état de la technique (appelé référence sur les figures annexées).

Mais, dans un deuxième temps, en réchauffant les cellules lorsqu'une valeur limite de tension est sur le point d'être franchie, objectif principal de l'invention, l'état de santé SoH décroît bien plus bas que pour la référence et la fin de vie est alors significativement repoussée.

**Avantages**

L'invention présente ainsi de nombreux avantages, parmi lesquels :

- Une solution simple permettant de maximiser la durée de vie d'une batterie ;

- Une solution qui permet de satisfaire plusieurs profils d'usage d'un appareil électrique, par exemple un véhicule électrique ou hybride ;

- Une solution qui s'avère particulièrement innovante, en ce qu'elle est axée sur la fin de vie d'une batterie occasionnée par l'atteinte d'une valeur limite de tension et non par la baisse de son état de santé SoH ;

**Revendications**

1. Procédé de gestion thermique d'une batterie (BATT), ladite batterie étant configurée pour fournir une tension à un appareil électrique sur une plage de tension dite opérationnelle pour faire fonctionner ledit appareil électrique, ledit procédé étant mis en oeuvre à l'aide d'une unité de gestion thermique (U_TH) de la batterie, ladite unité de gestion thermique (U_TH) étant configurée pour générer une température de consigne (T°cons) à appliquer à la batterie, lors de la sollicitation en puissance (PWR) de la batterie, **caractérisé en ce que** ladite température de consigne (T°cons) est générée à partir d'un modèle de gestion thermique (M_TH) recevant en entrée l'état de santé (SoH) de la batterie, ledit modèle de gestion thermique (M_TH) étant configuré pour déterminer la température de consigne à appliquer pour assurer la réalisation d'un profil de puissance (PU_i) prédéterminé en maintenant la tension fournie par la batterie sur sa plage de tension opérationnelle.

2. Procédé selon la revendication 1, **caractérisé en ce qu'**il comporte une étape de signalisation d'une fin de vie sous sollicitation en puissance de la batterie lorsque la température de consigne (T°cons) déterminé ne permet pas de maintenir la tension fournie par la batterie dans la plage de tension opérationnelle.

3. Procédé de gestion selon la revendication 1 ou 2, **caractérisé en ce que** le modèle de gestion thermique (M_TH) est configuré pour déterminer la température de consigne (T°cons) en minimisant la baisse de l'état de santé (SoH) de la batterie.

4. Procédé de gestion selon la revendication 3, **caractérisé en ce que** le modèle de gestion thermique (M_TH) est configuré pour déterminer la température de consigne (T°cons) en tenant compte également de l'état de charge (SoC) de la batterie.

5. Procédé de gestion selon la revendication 4, **caractérisé en ce que** le modèle de gestion thermique (M_TH) est défini sous la forme d'une cartographie de la température de consigne (T°cons) en fonction de l'état de santé de la batterie (SoH) et de son état de charge (SoC).

6. Procédé de gestion selon l'une des revendications 1 à 5, **caractérisé en ce que** le modèle de gestion thermique (M_TH) est obtenu par simulation du comportement de la batterie.

7. Procédé de gestion selon la revendication 6, **caractérisé en ce que** l'obtention du modèle de gestion thermique (M_TH) est réalisée hors-ligne.

8. Procédé de gestion selon la revendication 6 ou 7, **caractérisé en ce que** la simulation du comportement de la batterie est mise en oeuvre en utilisant un modèle de performance (M_perf) de la batterie, un modèle thermique (M_therm) de la batterie et un modèle de vieillissement (M_v) de la batterie.

9. Procédé de gestion selon la revendication 8, **caractérisé en ce que** le modèle de performance (M_perf) de la batterie est configuré pour générer la tension délivrée par la batterie ainsi que l'état de charge (SoC) de la batterie et sa puissance thermique (P_th), en fonction du profil de puissance (PU_i) prédéterminé à appliquer à la batterie, de la température (T°batt) de la batterie simulée à l'aide du modèle thermique, et de l'état de santé (SoH) de la batterie généré par le modèle de vieillissement (M_v).

10. Procédé de gestion selon la revendication 8 ou 9, **caractérisé en ce que** le modèle thermique (Mtherm) est configuré pour générer la température de la batterie (T°batt) en fonction de la puissance thermique (P_th) fournie par la batterie et déterminée par le modèle de performance (M_perf) et d'une température du fluide de refroidissement.

11. Procédé de gestion selon l'une des revendications 8 à 10, **caractérisé en ce que** le modèle de vieillissement (M_v) est configuré pour déterminer l'état de santé (SoH) de la batterie en tenant compte du profil de puissance (PU_i) appliqué à la batterie, de l'état de charge (SoC) de la batterie obtenu par le modèle de performance (M_perf), et de la température (T°batt) de la batterie obtenue par le modèle thermique (Mtherm).

12. Système de gestion thermique d'une batterie (BATT), ladite batterie étant configurée pour fournir une tension à un appareil électrique sur une plage de tension dite opérationnelle pour faire fonctionner ledit appareil électrique, ledit système de gestion thermique comportant une unité de gestion thermique (U_TH) de la batterie, ladite unité de gestion thermique (U_TH) étant configurée pour générer une température de consigne (T°cons) à appliquer à la batterie, lors de la sollicitation en puissance (PWR) de la batterie , **caractérisé en ce que** le système de gestion thermique est configuré pour générer ladite température de consigne (T°cons) à partir d'un modèle de gestion thermique (M_TH) recevant en entrée l'état de santé (SoH) de la batterie, ledit modèle de gestion thermique (M_TH) étant configuré pour déterminer la température de consigne à appliquer pour assurer la réalisation d'un profil de puissance (PU_i) prédéterminé, en maintenant la tension fournie par la batterie sur sa plage de tension opérationnelle.

13. Système selon la revendication 12, **caractérisé en ce qu'**il est configuré pour signaler une fin de vie sous sollicitation en puissance de la batterie lorsque la température de consigne (T°cons) déterminé ne permet pas de maintenir la tension fournie par la batterie dans la plage de tension opérationnelle.

14. Système selon la revendication 12 ou 13, **caractérisé en ce que** le modèle de gestion thermique (M_TH) est configuré pour déterminer la température de consigne (T°cons) en minimisant la baisse de l'état de santé (SoH) de la batterie.

15. Système de gestion selon la revendication 14, **caractérisé en ce que** le modèle de gestion thermique (M_TH) est configuré pour déterminer la température de consigne (T°cons) en tenant compte également de l'état de charge (SoC) de la batterie.

16. Système de gestion selon la revendication 15, **caractérisé en ce que** le modèle de gestion thermique (M_TH) est défini sous la forme d'une cartographie de la température de consigne (T°cons) en fonction de l'état de santé de la batterie (SoH) et de son état de charge (SoC).

17. Système de gestion selon l'une des revendications 12 à 16, **caractérisé en ce que** le modèle de gestion thermique (M_TH) est obtenu par simulation du comportement de la batterie.

18. Système de gestion selon la revendication 17, **caractérisé en ce que** l'obtention du modèle de gestion thermique (M_TH) est réalisée hors-ligne.

19. Système de gestion selon la revendication 17 ou 18, **caractérisé en ce que** la simulation du comportement de la batterie est mise en oeuvre en utilisant un modèle de performance (M_perf) de la batterie, un modèle thermique (M_therm) de la batterie et un modèle de vieillissement (M_v) de la batterie.

20. Système de gestion selon la revendication 19, **caractérisé en ce que** le modèle de performance (M_perf) de la batterie est configuré pour générer la tension délivrée par la batterie, ainsi que l'état de charge (SoC) de la batterie et sa puissance thermique (P_th), en fonction du profil de puissance (PU_i) prédéterminé à appliquer à la batterie, de la température (T°batt) de la batterie simulée à l'aide du modèle thermique, de l'état de santé (SoH) de la batterie généré par le modèle de vieillissement (M_v).

21. Système de gestion selon la revendication 19 ou 20, **caractérisé en ce que** le modèle thermique (M_therm) est configuré pour générer la température de la batterie (T°batt) en fonction de la puissance thermique fournie par la batterie et déterminée par le modèle de performance (M_perf) et d'une température du fluide de refroidissement.

22. Système de gestion selon l'une des revendications 19 à 21, **caractérisé en ce que** le modèle de vieillissement (M_v) est configuré pour déterminer l'état de santé (SoH) de la batterie en tenant compte du profil de puissance (PU_i) appliqué à la batterie, de l'état de charge (SoC) de la batterie et de la température (T°batt) de la batterie obtenue par le modèle thermique (M_therm).

*Fig. 1*

**Fig. 2**

*Fig. 3A*

*Fig. 3B*

**Fig. 4A**

Profil de puissance exigé sur la semaine

**Fig. 4B**

Evolution de la tension sur la semaine

*Fig. 4C*

**Evolution du SoH sur la semaine**

$\Delta SoH$

**Fig. 5**

Cartographie de la température pour le profil commuting

**Fig. 6A**

Evolution du SoH pour un profil 'commuting'

**Fig. 6B**

Evolution de la tension minimale pour un profil 'commuting'

Europäisches
Patentamt

European
Patent Office

Office européen
des brevets

**RAPPORT DE RECHERCHE EUROPEENNE**

Numéro de la demande

EP 24 21 8936

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2021/273270 A1 (FUJIKAWA HIROSHI [JP] ET AL) 2 septembre 2021 (2021-09-02) * alinéas [0030] - [0046], [0048] - [0098] * ----- | 1-22 | INV. H01M10/44 H01M10/42 H01M10/48 H01M10/613 |
| X | US 2021/111446 A1 (STEWART SARAH [US] ET AL) 15 avril 2021 (2021-04-15) * alinéas [0013] - [0026], [0036] - [0039], [0068] * ----- | 1,12 | H01M10/615 H01M10/625 H01M10/63 H01M10/633 H01M10/651 |
| X | GB 2 504 689 A (JAGUAR LAND ROVER LTD [GB]) 12 février 2014 (2014-02-12) * page 2, ligne 21 - page 5, ligne 14 * * page 7, ligne 7 - page 15, ligne 29 * ----- | 1,12 | G01R31/00 H02J7/00 |

**DOMAINES TECHNIQUES RECHERCHES (IPC)**

H01M
G01R
H02J

Le présent rapport a été établi pour toutes les revendications

| Lieu de la recherche | Date d'achèvement de la recherche | Examinateur |
|---|---|---|
| Munich | 2 mai 2025 | Mugnaini, Veronica |

EPO FORM 1503 03.82 (P04C02)

# EP 4 576 319 A1

## ANNEXE AU RAPPORT DE RECHERCHE EUROPEENNE
## RELATIF A LA DEMANDE DE BREVET EUROPEEN NO.

EP 24 21 8936

02-05-2025

| Document brevet cité au rapport de recherche | Date de publication | Membre(s) de la famille de brevet(s) | | Date de publication |
|---|---|---|---|---|
| US 2021273270 A1 | 02-09-2021 | CN | 112292782 A | 29-01-2021 |
| | | JP | 7349628 B2 | 25-09-2023 |
| | | JP | WO2019244489 A1 | 26-07-2021 |
| | | US | 2021273270 A1 | 02-09-2021 |
| | | WO | 2019244489 A1 | 26-12-2019 |
| US 2021111446 A1 | 15-04-2021 | CN | 112652839 A | 13-04-2021 |
| | | DE | 102020212579 A1 | 15-04-2021 |
| | | US | 2021111446 A1 | 15-04-2021 |
| GB 2504689 A | 12-02-2014 | EP | 2879898 A2 | 10-06-2015 |
| | | GB | 2504689 A | 12-02-2014 |
| | | US | 2015165919 A1 | 18-06-2015 |
| | | WO | 2014023746 A2 | 13-02-2014 |

EPO FORM P0460

## RÉFÉRENCES CITÉES DANS LA DESCRIPTION

**Documents brevets cités dans la description**

- US 8410760 B2
- US 2021273270 A1
- GB 2504689 A